Europäisches Patentamt

European Patent Office

Office européen des brevets

(19)

(11) Veröffentlichungsnummer: **0 375 986**

**A1**

# (12) EUROPÄISCHE PATENTANMELDUNG

(21) Anmeldenummer: **89122141.8**

(22) Anmeldetag: **30.11.89**

(51) Int. Cl.⁵: **F01N 3/28, B01D 53/36, B01J 35/04**

(30) Priorität: **30.12.88 DE 3844348**

(43) Veröffentlichungstag der Anmeldung:
**04.07.90 Patentblatt 90/27**

(84) Benannte Vertragsstaaten:
**DE ES FR GB IT SE**

(71) Anmelder: **Süddeutsche Kühlerfabrik Julius Fr. Behr GmbH & Co. KG**
**Mauserstrasse 3**
**D-7000 Stuttgart 30(DE)**

(72) Erfinder: **Bayer, Jürgen, Dipl.-Ing. (FH)**
**Albstrasse 23**
**D-7300 Esslingen 1(DE)**
Erfinder: **Grüner, Andreas, Dipl.-Ing. (FH)**
**Rudolfstrasse 8**
**D-7320 Göppingen(DE)**

(74) Vertreter: **Wilhelm & Dauster Patentanwälte**
**European Patent Attorneys**
**Hospitalstrasse 8**
**D-7000 Stuttgart 1(DE)**

(54) **Trägerkörper für einen katalytischen Reaktor zur Abgasreinigung.**

(57) Bei der vorliegenden Anmeldung sind die Scheitelflächen von Wellteilstücken in der Strömungsrichtung hintereinander in längsgerichteten Zonen des Wellbandes, aber in benachbarten Zonen versetzt zueinander angeordnet. Der freie Querschnitt von in Richtung der Durchströmung benachbarten Wellteilstücken überdeckt teilweise den freien Querschnitt des anderen Wellteilstückes. Es wird vorgeschlagen, diese Wellteilstücke so in einem Muster anzuordnen, daß mindestens ein Teil der Scheitelflächen längs einer schräg zu den Seitenkanten des Wellbandes verlaufenden Linie angeordnet ist. Das Wellband in benachbarten Lagen wird jeweils um 180° zu einer parallel zu den Seitenkanten verlaufenden oder senkrecht dazu angeordneten Achse verdreht angeordnet. Durch diese Ausgestaltung ist immer die Gewähr dafür gegeben, daß die nach außen gerichteten Scheitelflächen einer Wellbandlage an Scheitelflächen des benachbarten Bandes anliegen.

Verwendung für Abgaskatalysatoren von Kraftfahrzeugen.

FIG.2

## Trägerkörper für einen katalytischen Reaktor zur Abgasreinigung

Die Erfindung betrifft einen Trägerkörper für einen katalytischen Reaktor zur Abgasreinigung nach dem Oberbegriff des Patentanspruches 1.

Trägerkörper dieser Art sind bekannt (DE-33 47 086 A1). Dabei sind die dort vorgesehenen Wellbänder in der Art von Turbulenzblechen ausgebildet, die auch als Einlagen für Scheiben oder Flachrohre von Wärmetauschern verwendet werden. Das Querschnittsprofil der dort vorgesehenen Wellungen ist trapezförmig so gestaltet, daß der offene Teil des Wellprofiles eine geringere Breite als der geschlossene Scheitel der Welle aufweist, so daß dadurch benachbarte Lagen eines gewickelten Wellbandes nicht ineinanderrutschen können. Für einen geschichteten Trägerkörper, dessen Herstellung aber wegen der einzelnen Aufeinanderschichtung verschiedener Teilstücke aufwendiger ist, wird dort auch vorgeschlagen, die einzelnen Lagen so auszuschneiden, daß die Scheitel der Wellungen schräg zu den Längskanten verlaufen, so daß durch jeweils um 180° versetzt geschichtete Blechlagen ein Ineinanderrutschen auch dann vermieden werden kann, wenn die Wellprofile nicht den vorher erwähnten trapezförmigen Querschnitt aufweisen. Für gewickelte Trägerkörper allerdings müssen die Wellprofile den erwähnten trapezförmigen Querschnitt aufweisen, wenn nicht, was ebenfalls bekannt ist (DE-GM 84 38 260), das Wellband zusammen mit einem Glattband aufgewickelt werden soll. Die Verwendung zusätzlicher Glattbänder weist aber wiederum den Nachteil auf, daß die so nach dem Wickeln entstehenden Trägerkörper in radialer Richtung relativ undurchlässig sind, auch wenn die Glattbänder mit zusätzlichen Öffnungen versehen werden.

Die Herstellung eines trapezförmigen Querschnittes der vorher erwähnten Art für ein Wellband ist verhältnismäßig aufwendig. Es wird nämlich notwendig, das Wellband zunächst mit Hilfe von entsprechend ausgebildeten Prägewalzen herzustellen und es muß dann, etwa durch Stauchen dafür gesorgt werden, daß die aus Herstellungsgründen zunächst nicht die gewünschte Trapezform mit der engen Öffnung aufweisenden Wellbänder entsprechend verformt werden.

Der vorliegenden Erfindung liegt daher die Aufgabe zugrunde, einen Trägerkörper der eingangs genannten Art so zu gestalten, daß benachbarte Lagen des Wellbandes nicht ineinanderrutschen können, auch wenn der Querschnitt der Wellung nicht in der vorher erwähnten Weise trapezförmig mit einer engeren Öffnung als der Scheitel ausgestaltet ist.

Zur Lösung dieser Aufgabe werden bei einem Trägerkörper nach dem Oberbegriff des Patentanspruches 1 die kennzeichnenden Merkmale des Patentanspruches 1 vorgesehen. Durch diese Ausgestaltung ist immer die Gewähr dafür gegeben, daß die nach außen gerichteten Scheitelflächen der Wellteilstücke an Scheitelflächen des benachbarten Bandes anliegen. Die gewählte Anordnung von in Längsrichtung in Zonen angeordneten Wellteilstücken erlaubt zum einen das übliche Herstellungsverfahren für Wellbänder weiterzuverwenden, gibt aber dann, wenn zwei um 180° gegeneinander verdrehte identische Wellbänder gemeinsam zum Trägerkörper aufgewickelt werden, die Gewähr, daß keine Gefahr des Ineinanderrutschens benachbarter Lagen gegeben ist.

Die entsprechende Anordnung der Scheitelflächen in einem Muster läßt sich auf verschiedene Weise erreichen. So kann zum einen in sehr einfacher Weise die Längsachse des Wellbandes eine Asymmetrieachse sein und es können die Scheitelflächen nach den Merkmalen des Patentanspruches 2 und 3 angeordnet werden. Sie bilden dann - ähnlich wie es auch bei den vorher erwähnten geschichteten Trägerkörpern der Fall ist - schräg verlaufende Wellenkämme, die sich in benachbarten Lagen kreuzen.

Möglich ist es aber auch nach den Merkmalen des Ansprüches 5, eine der längs gerichteten Zonen oder auch mehrere, breiter als die anderen Zonen auszubilden, so daß auch dann nach einer 180° Wendung eines identischen Wellbandes um die Längsachse zwei Wellbänder zusammengewickelt werden können, ohne daß sie wegen der breiteren oder weniger breiteren Scheitelflächen der Wellteilstücke ineinanderrutschen können. Die Scheitelflächen liegen auch bei dieser Ausgestaltung immer auf Scheitelflächen des benachbarten Bandes auf.

Möglich ist es aber auch nach den Merkmalen des Ansprüches 6, die Wellteilstücke in einem pfeilförmigen Muster anzuordnen, wobei dann allerdings eine Wendung um die Längsachse nicht ausreicht, sondern eine 180°-Wendung der benachbarten Lage um eine Querachse notwendig ist. Mit anderen Worten, es müssen dann zwei zwar identisch ausgebildete Wellbänder in umgekehrter Längsrichtung miteinander aufgewickelt werden, so daß beim einen Wellband die Spitzen der pfeilförmigen Anordnung in die eine Richtung und beim anderen in die andere Richtung weisen. Auch dann überkreuzen sich die von den Scheitelflächen der Wellteilstücke gebildeten Wellenkämme beidseits von der Längsmitte des Bandes und verhindern zuverlässig ein Ineinanderrutschen der zusammen aufgewickelten Bänder. Möglich ist es schließlich aber auch, die Scheitelflächen nach den Merkmalen der Ansprüche 7 und 8 anzuordnen. Auch dann kreuzen sich die Scheitelflächen benachbarter Lagen, wenn in diesen die Wellbänder um 180° verdreht zueinander sind. Selbstverständlich wäre es auch möglich, geschichtete Trägerkörper mit solchen Teilen von Wellbändern zu bilden. Dies wäre aber auch mit anderen bekannten Ausgestaltungen möglich. Durch die Erfindung wird aber die einfache Möglichkeit geboten, ausgehend von einem Wellband, das kontinuierlich in an sich bekannter Weise durch Prägewalzen hergestellt werden kann, einen ebenfalls in üblicher Weise gewickelten Trägerkörper zu bilden.

Die Merkmale des Anspruches 9 schließlich bieten eine Möglichkeit, die Stabilität des Wellbandes zu erhöhen, weil durch die Vergrößerung der Länge der Scheitel im Vergleich zum Versatz benachbarter Wellteilstücke auch die gemeinsame Scheitelfläche und damit der verbleibende Steg zwischen benachbarten Wellteilstücken breiter gehalten werden kann.

Die Erfindung ist in der Zeichnung anhand von Ausführungsbeispielen dargestellt und wird im folgenden erläutert. Es zeigen:

Fig. 1 eine schematische Darstellung einer Seitenansicht eines Trägerkörpers nach der Erfindung während der Herstellung,

Fig. 2 eine schematische Draufsicht auf die zur Herstellung des Trägerkörpers der Fig. 1 verwendeten metallischen Wellbänder,

Fig. 3 eine schematische Darstellung des Verlaufes der Wellenkämme der Bänder der Fig. 2,

Fig. 4 eine vergrößerte Darstellung des Teilschnittes durch das untere Band der Fig. 2 längs der Schnittlinie IV-IV in Fig. 2,

Fig. 5 eine Draufsicht und Darstellung ähnlich Fig. 3 jedoch mit Bändern in einer anderen Ausführungsform,

Fig. 6 eine Draufsicht auf zwei Wellbänder ähnlich Fig. 2 jedoch mit Wellbändern in einer anderen Ausführungsform,

Fig. 7 die Draufsicht auf Wellbänder ähnlich Fig. 2 jedoch in einer weiteren Ausführungsform der Wellbänder und

Fig. 8 die vergrößerte Darstellung des Teilschnittes durch das untere Band der Fig. 6 gemäß der Schnittlinie VIII-VIII in vergrößertem Maßstab.

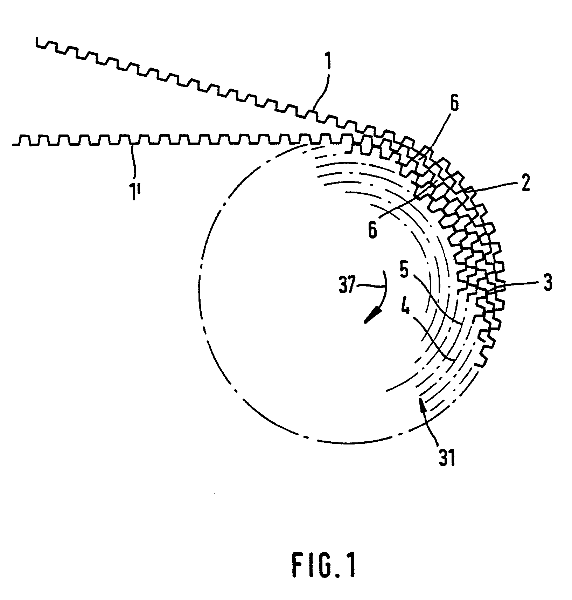

Wie Fig. 1 erkennen läßt, wird ein Trägerkörper nach der Erfindung beim Ausführungsbeispiel in bekannter Weise durch Wickeln von Metallbändern (1, 1') hergestellt, die in einer geeigneten Vorrichtung im Sinn des Pfeiles (37) spiralförmig aufeinandergewickelt werden. Die Bänder (1 und 1') bilden dabei aneinandergrenzende Lagen (2, 3, 4 und 5). Die Wellbänder (1 und 1') besitzen jeweils Wellungen mit etwa trapezförmigem Querschnitt. Sie sind in später noch zu erläuternder Weise so ausgebildet, daß mit Sicherheit ein Ineinanderrutschen eines Wellenberges in ein Wellental der benachbarten Lage vermieden wird. Zwischen die Bänder (1 und 1') muß daher nicht, wie beim Stand der Technik, etwa ein Glattband als Abstützung eingewickelt werden. Auch die Form des Wellenquerschnittes selbst bedarf keiner besonderen Ausgestaltung, für deren Herstellung mehrere Arbeitsvorgänge notwendig wären.

Da die benachbarten Lagen (2, 3, 4 oder 5) der beiden aufgewickelten Bänder (1 und 1') im Trägerkörper (31) nicht ineinanderrutschen, werden zwischen zwei benachbarten Lagen Strömungskanäle (6) gebildet, die in Axialrichtung des gewickelten Trägerkörpers (31) von dem zu reinigenden Gas durchströmt werden können.

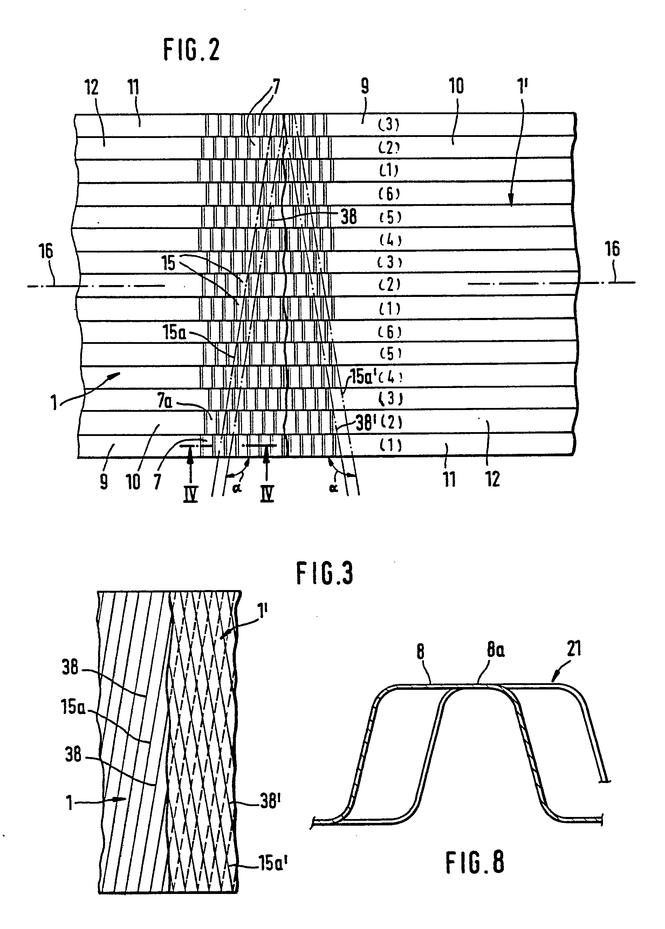

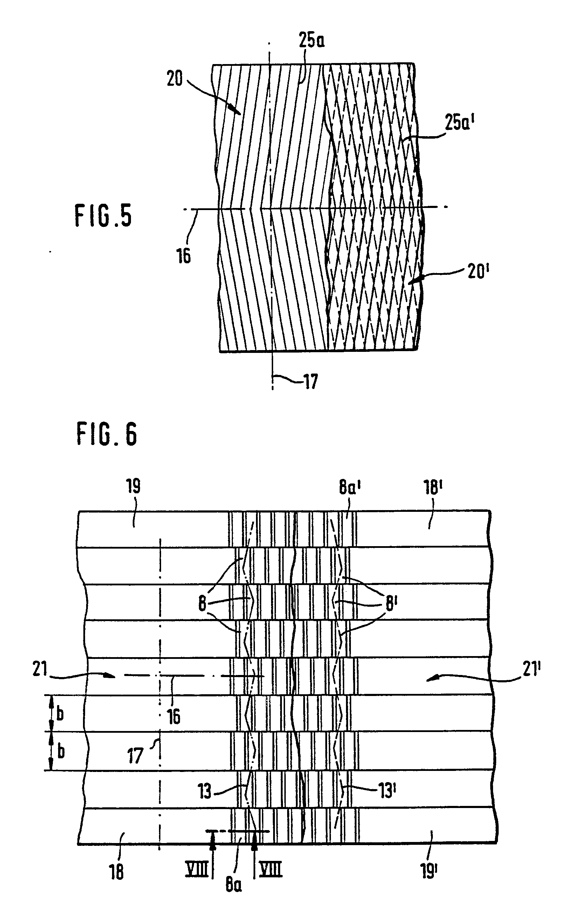

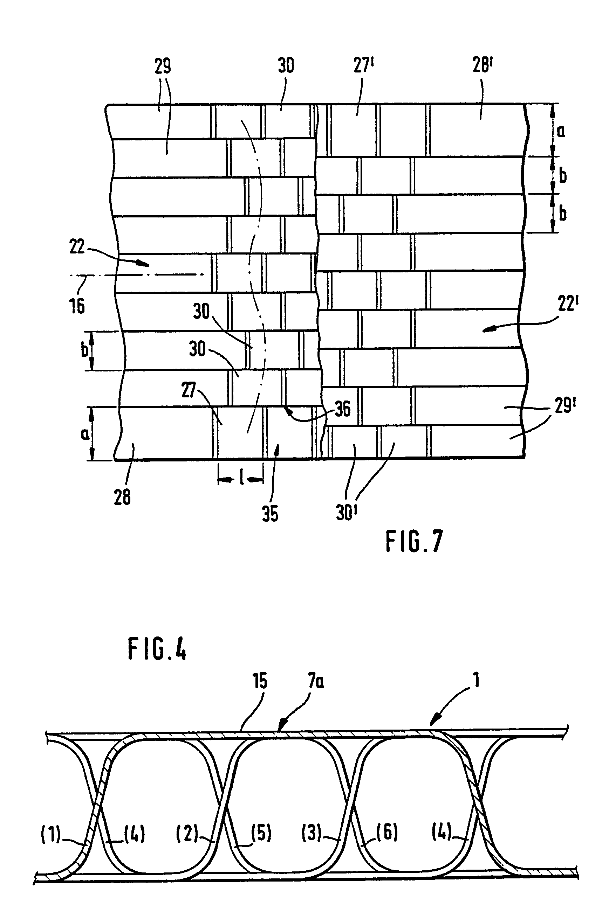

Wie aus den Fig. 2 bis 4 weiter erkennbar ist, bilden die Wellbänder (1 und 1') keine glatt axial durchgehenden Strömungskanäle, sondern jeweils in Achsrichtung verlaufende Teilströmungskanäle, die von Wellteilstücken (7, 7a) gebildet werden, die in an sich bekannter Weise in Richtung der Längsachse (16) der Wellbänder (1) bzw. (1') gegeneinander versetzt sind, so daß, wie Fig. 4 erkennen läßt, der Querschnitt des ersten, in der Zone (9) gelegenen Wellteilstückes (7) teilweise von dem Querschnitt des dahinterliegenden, benachbarten und in der Zone (10) liegenden Wellteilstückes (7a) und der weiteren Wellteilstücke überdeckt ist. Die einzelnen Stege der Wellteilstücke (7, 7a), die quer zur Längsachse (16) hintereinanderliegen, sind zur besseren Erkennbarkeit dieser Überdeckungen mit den in Klammern gesetzten Zahlen versehen, die - von 1 bis 6 - der entsprechend bezeichneten Zone der Bänder (1) bzw. (1') zugeordnet sind. Es wird deutlich, daß sich die Steganordnung jeweils nach 6 Zonen wiederholt. Das axial durch den Trägerkörper (31) strömende Gas hat durch diese Ausgestaltung daher die Möglichkeit, nicht nur axial den Trägerkörper (31) zu durchströmen, sondern es kann auch an den offenen Querschnittsflächen seitlich austreten und sich beispielsweise auch radial verteilen. Dieser Effekt ergibt eine bessere Ausnützung der Katalysatoroberfläche des beschichteten Trägerkörpers (31) gegenüber Trägerkörpern mit ausschließlich axial durchgehenden Strömungskanälen.

Das Problem der Herstellung solcher gewickelter Trägerkörper (31) besteht, wie vorher angedeutet, darin, zu verhindern, daß benachbarte Lagen der gewickelten Bänder ineinanderrutschen und damit den freien Strömungsquerschnitt behindern oder zunichte machen. Um dies zu vermeiden, ist bei dem Ausführungsbeispiel der Fig. 2 bis 4 vorgesehen, daß das mit Wellteilstücken (7, 7a usw.) versehene metallische Wellband (1) so hergestellt wird, daß benachbarte Wellteilstücke (7, 7a usw.), die jeweils in einzelnen Längszonen (9, 10 bzw. 11 und 12 u.dgl.) gleicher Breite auf dem Wellband (1) angeordnet sind, in Axialrichtung, d.h. quer zur Längsachse (16) jeweils um einen gleichbleibenden Betrag in der Längsrichtung, und zwar jeweils nach der gleichen Richtung hin, versetzt zueinander sind. Es ergeben sich dadurch, wie Fig. 2 zeigt, durchgehende Stegflächen (15) -siehe auch Fig. 4 - mit denen die Wellteilstücke (7, 7a usw.) untereinander verbunden sind, die alle längs einer Geraden angeordnet werden können, die schräg zur Längsachse (16) verläuft und die Mittellinie eines Wellenkammes (15a) andeutet, der unter einem bestimmten Winkel (α) zur Längsachse (16) verläuft. Dieser Wellenkamm (15a) geht auf beiden Seiten in ein Wellental über, das jeweils auch unter dem Winkel (α) schräg zur Längsachse (16) verläuft. Die Längsachse (16), die in der Längsmittelebene des Wellbandes (1) verläuft, stellt daher bei dieser Ausführungsform eine Achse dar, zu der das von den Wellteilenstücken (7, 7a u.dgl.) gebildete Muster unsymmetrisch ist.

Die Bänder (1 und 1') der Fig. 2 bis 4 und 1' werden nun so gemeinsam zu dem Trägerkörper (31) nach Fig. 1 aufgewickelt, daß das Wellband (1') gegenüber dem Wellband (1) um 180° um diese die Asymmetrieachse bildende Längsachse (16) verdreht angeordnet wird und in dieser Lage mit dem Wellband (1) aufgewickelt wird. Die Fig. 2 und 3 lassen deutlich werden, daß sich durch diese 180°-Verdrehung die Wellenkämme (15a) und natürlich auch die Wellentäler (38) der so aneinanderliegenden Wellbänder (1 und 1') überkreuzen. Die Stege (15) der Wellenberge liegen daher stets an ebensolchen Stegen des benachbarten Bandes an und verhindern sicher ein Ineinanderrutschen benachbarter Wickellagen. Die gleich ausgebildeten Wellentäler ihrerseits stellen wiederum die Stege für das Anlegen der benachbarten Wickellage dar. Es wird deutlich, daß auf diese Weise nur ein Wellband hergestellt zu werden braucht, das aber für den Wickelvorgang eines Trägerkörpers in zwei gleich lange Bandstreifen unterteilt werden muß, die jeweils um 180° um die Längsachse verdreht gemeinsam gewickelt werden. Die Herstellung des Wellbandes (1) kann in bekannter Weise dadurch vor sich gehen, daß ein zunächst glattes Wellband aus Metall durch ein Präge-Schneidwalzenpaar geführt wird, das die gewünschten Wellteilstücke aus dem Band herausdrückt. Da die Querschnitte der einzelnen Wellteilstücke - siehe Fig. 4 - trapezförmig sind und die größere Seite die offene Seite der Wellung darstellt, bestehen auch keine Schwierigkeiten, die Prägenocken der Walze wieder aus dem geprägten Querschnitt herauszubekommen. Eine nachträgliche Verformung, wie beim Stand der Technik, wird überflüssig.

Die Fig. 5 zeigt in einer Darstellung ähnlich Fig.3 schematisch die Anordnung von Wellenkämmen (25a), die ein von der Fig. 2 abweichendes Muster auf dem Wellband (20) bilden. Hier ist nämlich die Anordnung der Wellteilstücke, die in Fig. 5 nicht gezeigt sind, so getroffen, daß die von den verbleibenden Reststegen zwischen benachbarten Wellteilstücken und von den Scheiteln der Wellteilstücke selbst gebildeten Wellenkämme (25a) pfeilförmig von der Längsmittelachse (16) aus nach außen verlaufen. Dieses Muster ist damit zwar symmetrisch zu der Längsmittelachse (16), aber asymmetrisch zu einer unter 90° zu dieser Längsmittelachse (16) verlaufenden Querachse (17). Das Band (20) muß daher, ehe es in der gleichen Weise wie das Band (1) gemäß Fig. 1 zu einem Trägerkörper (31) gewickelt wird, nach seiner Herstellung auch in einen zweiten Bandstreifen gleicher Länge geteilt werden, der nun aber vor dem Wickelvorgang nicht um die Längsachse (16) um 180° gedreht wird, sondern um die Querachse (17) um 180° verschwenkt werden muß, ehe er mit dem Band (20) gemeinsam zum Trägerkörper (31) aufgewickelt werden kann. Es ergibt sich dann die aus der Fig. 5 ersichtliche Situation, daß die Wellenkämme (25a) des unteren Bandes (20) und die Wellenkämme (25a') des benachbarten Bandes (20') sich jeweils beidseits von der Längsmittelachse (16) in der gleichen Weise kreuzen, wie das bei dem Beispiel der Fig. 2 bis 4 der Fall war. Auch in diesem Fall wird die Herstellung des Wellbandes (20) in üblicher Weise ermöglicht. Die Herstellung des Trägerkörpers (31) kann durch Wickeln erfolgen.

Die Fig. 6 zeigt eine Variante, bei der die Wellteilstücke (8) zwar ebenfalls wie bei den vorangegangenen Ausführungsbeispielen in Längszonen (18 bzw. 19) eines Metallwellbandes (21) angeordnet und jeweils in benachbarten Zonen in Längsrichtung versetzt zueinander sind. Der Versatz wird hier aber so gewählt, daß jeweils in jeder zweiten Zone die Wellteilstücke (8) axial zueinander ausgerichtet sind, d.h. jedes zweite Wellteilstück (8) ist fluchtend zu einem anderen in einer senkrecht zur Längsachse (16) verlaufenden Geraden ausgerichtet. Die verbleibenden und gemeinsamen Scheitelflächen bilden daher eine Art Zick-Zack-Verlauf quer zur Bandlängsrichtung, der in Fig. 6 durch eine strichpunktierte Linie (13) angedeutet ist. Um bei einer solchen Ausgestaltung ein Ineinanderrutschen benachbarter Lagen von Wellbändern zu vermeiden, reicht es aus, das benachbart zu dem Wellband (21) aufzuwickelnde Bandstück (21') um 180° um die Querachse (17) in die Lage (21') zu drehen. In dieser gedrehten Lage nehmen die Scheitelflächen (8a) eine Lage ein, bei der die Zickzacklinie (13') nun spiegelverkehrt zu der Linie (13) ·der darunterliegenden Lage (21) verläuft. Die Scheitelflächen kreuzen sich daher ebenfalls und es kann sich, wie der Darstellung der Fig. 6 auch ohne weiteres entnommen werden kann, mindestens jeder zweiter Scheitel der Wellteilstücke (8) an einem Scheitelsteg der Wellteilstücke (8') abstützen. Die Ausbildung eines solchen Musters der Wellteilstücke führt auch hier zu einem Versatz der Wellenstege in der Bandquerrichtung, die eine sichere Abstützung der Bänder gegeneinander erlaubt und damit das Hereinrutschen von benachbarten Bandlagen vermeidet. Die Herstellung des Bandes (21) der Fig. 6 erfolgt, wie vorher angedeutet, in bekannter Weise durch Präge-Schneidwalzen.

Die Fig. 7 und 8 zeigen eine weitere Variante der Ausführungsform der Fig. 6 insofern, als hier gegenüber der Ausführungsform der Fig. 6 die Teilung der Wellteilstücke (27 bzw. 30) und die Breite der Zonen (28, 29) anders ist. Die Länge (1) der äußeren Scheitelflächen (35) jedes Wellteilstückes ist größer als beim Ausführungsbeispiel der Fig. 6. Dies führt auch dazu, daß in Achsrichtung, d.h. in Richtung quer zu der Längsmittelachse (16) gesehen, in den Querschnitt eines Wellteilstückes (27), wie bei Fig. 2 und 4 die Querschnitte der axial dahinterliegenden Wellteilstücke (30) zum Teil hereinragen. Diese Ausgestaltung bringt den Vorteil mit sich, daß neben der Scheitel fläche (35) eines einzelnen Wellteilstückes auch die verbleibende Reststegfläche (36) zwischen zwei Wellteilstücken breiter ist, so daß die Stabilität eines so ausgebildeten Wellbandes (22) größer als bei einer Ausführungsform nach Fig. 2 oder 6 ist. Die Scheitelflächen (35) bilden auch beim Band (22), was die Mittellinie der Wellenkämme betrifft, eine Art Zick-Zack-Muster. Im übrigen ist hier die Ausgestaltung so gewählt, daß die Wellteilstücke in mehreren Zonen (29) mit der Breite (b), das Wellteilstück (27) dagegen in einer breiteren Längszone (28) mit der Breite (a) angeordnet sind, so daß in diesem Fall nach einer Verdrehung des Bandes (22) um 180° um die Längsachse (16) die benachbarte Lage (22') nicht in die darunterliegende Lage hereinrutschen kann. Bei diesem Ausführungsbeispiel liegt nämlich die breitere Zone (28') mit ihren Wellteilstücken (27') den schmäleren Zonen (29) des darunterliegenden Bandes gegenüber, so daß sich auch hier die Stegflächen benachbarter Lagen aneinander abstützen können. Auch das Band (22) kann in ähnlicher Weise hergestellt werden, wie die anderen geschilderten Bänder. Es bedarf nur der Verwendung anderer Präge-Schneidwalzen.

Die Herstellung eines Trägerkörpers (31) ist in den vorstehenden Beispielen anhand eines Wickelverfahrens erläutert. Dies ist auch das wohl wirtschaftlichste Herstellungsverfahren für Trägerkörper, die aus Metallbändern aufgebaut sind. Die Ausbildung der in den vorstehenden Ausführungsbeispielen geschilderten Wellbänder erlaubt es aber auch, jeweils Teilstücke von den Bändern abzutrennen und sie jeweils nach einer 180°-Wendung aufeinanderliegend zu schichten, wenn dies gewünscht sein sollte.

## Ansprüche

1. Trägerkörper für einen katalytischen Reaktor zur Abgasreinigung, insbesondere für Verbrennungskraftmaschinen von Kraftfahrzeugen, bestehend aus aneinandergrenzenden Lagen (2, 3, 4, 5) eines metallischen Wellbandes (1, 20, 21, 22), die Strömungskanäle (6) bilden, welche aus mehreren, hintereinander liegenden Wellteilstücken (7, 8, 27, 30) bestehen, die jeweils in längsgerichteten Zonen (9, 10, 18, 19, 28, 29) des Wellbandes (1, 20, 21, 22) senkrecht zur Längsrichtung verlaufen, aber in benachbarten Zonen (9, 10) bzw. (11, 12) versetzt zueinander so angeordnet sind, daß der freie Querschnitt (13) eines in Richtung der Durchströmung benachbarten Wellteilstücks (7, 8, 27, 30) jeweils teilweise den freien Querschnitt (14) des anderen Wellteilstücks überdeckt und benachbarte Wellteilstücke wenigstens teilweise mit einer Scheitelfläche (15) ineinander übergehen, dadurch gekennzeichnet, daß die Scheitelflächen (15) der Wellteilstücke (7, 8, 27, 30) in einem Muster angeordnet so sind, daß mindestens ein Teil der Scheitelflächen längs einer schräg zu den Seitenkanten des Wellbandes verlaufenden Linie angeordnet ist und daß das Wellband in benachbarten Lagen (2, 3) jeweils um 180° zu einer parallel zu den Seitenkanten ver laufenden oder senkrecht dazu angeordneten Achse (16) bzw. (17) verdreht angeordnet ist.

2. Trägerkörper nach Anspruch 1, dadurch gekennzeichnet, daß das Muster asymmetrisch zu einer in der Längsmittelebene des Bandes verlaufenden Achse (16) oder senkrecht zu dieser verlaufenden Querachse (17) ausgebildet ist.

3. Trägerkörper nach Anspruch 2, dadurch gekennzeichnet, daß die Asymmetrieachse die Längsachse (16) ist, und die gemeinsamen Scheitelflächen (15) der Wellteilstücke (7) jeweils einen schräg zur Längsrichtung verlaufenden Wellenkamm (15a) bilden.

4. Trägerkörper nach Anspruch 1 oder 3, dadurch gekennzeichnet, daß alle Zonen (9, 10, 11, 12), in denen die Wellteilstücke (7, 7a) angeordnet sind, gleich breit ausgebildet sind.

5. Trägerkörper nach Anspruch 1 und 2, dadurch gekennzeichnet, daß die Asymmetrieachse die Längsachse (16) ist, und mindestens eine der außermittig liegenden Zonen (18, 28) eine von der Breite (b) der anderen Zonen (19, 29) abweichende Breite (a) besitzt.

6. Trägerkörper nach den Ansprüchen 1, 2 und 4, dadurch gekennzeichnet, daß die Asymmetrieachse eine Querachse (17) ist, und die Scheitelflächen (25a) der Wellteilstücke pfeilförmig von der Längsmitte (16) des Wellbandes (20) aus nach außen verlaufend angeordnet sind.

7. Trägerkörper nach Anspruch 1, dadurch gekennzeichnet, daß die Scheitelflächen (8a) der Stege (8) jeweils ein zickzackförmig verlaufendes und quer zur Längsachse (16) angeordnetes Muster bilden.

8. Trägerkörper nach Anspruch 7, dadurch gekennzeichnet, daß alle Stege (8) in Zonen (19, 18) gleicher Breite angeordnet sind.

9. Trägerkörper nach Anspruch 1, dadurch gekennzeichnet, daß benachbarte Wellteilstücke (27, 30) um weniger als die Hälfte der in Bandlängsrichtung gemessenen Länge (1) ihrer Scheitel (35) gegeneinander versetzt sind.

10. Trägerkörper nach einem der vorstehenden Ansprüche, dadurch gekennzeichnet, daß die beiden identischen, aber um 180° zueinander verdrehten Wellbänder (1, 1', 20, 20', 21, 21', 22, 22') gemeinsam zu dem Trägerkörper (31) aufgewickelt sind.

FIG.1

EP 0 375 986 A1

FIG.2

FIG.3

FIG.8

FIG.5

FIG. 6

**FIG.7**

**FIG.4**

**Europäisches Patentamt**

# EUROPÄISCHER RECHERCHENBERICHT

Nummer der Anmeldung

EP 89 12 2141

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 244 798 (GRACE) <br> * Figuren 1,2 * <br> --- | 1-10 | F 01 N 3/28 <br> B 01 D 53/36 <br> B 01 J 35/04 |
| D,A | DE-A-3 347 086 (BEHR) <br> * Figuren 5,6 * <br> --- | 1-10 | |
| D,A | EP-A-0 186 801 (BEHR) <br> * Figuren 1,2 * <br> --- | 1-10 | |
| A | EP-A-0 117 602 (GMC) <br> * Figuren 5,6 * <br> --- | 1-10 | |
| A | FR-A-2 257 340 (IMPERIAL CHEM. IND.) <br> * Figuren 4-7 * <br> --- | 1-10 | |
| A | GB-A-2 040 179 (BEHR) <br> * Figuren 1,2 * <br> --- | 1-10 | |
| A | DE-A-3 526 135 (W. RETALLICK) <br> ----- | | |

| | RECHERCHIERTE SACHGEBIETE (Int. Cl.5) |
|---|---|
| | F 01 N <br> B 01 D <br> B 01 J |

Der vorliegende Recherchenbericht wurde für alle Patentansprüche erstellt

| Recherchenort | Abschlußdatum der Recherche | Prüfer |
|---|---|---|
| DEN HAAG | 26-03-1990 | KANOLDT W.W. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes Dokument